(19) Europäisches Patentamt / European Patent Office / Office européen des brevets

(11) **EP 3 264 289 B1**

(12) **EUROPEAN PATENT SPECIFICATION**

(45) Date of publication and mention of the grant of the patent:
**05.08.2020 Bulletin 2020/32**

(51) Int Cl.:
***G06F 16/33*** *(2019.01)*

(21) Application number: **16177303.1**

(22) Date of filing: **30.06.2016**

(54) **SYSTEM AND METHOD FOR SEARCHING OVER ENCRYPTED DATA USING A BOOLEAN SEARCH QUERY**

SYSTEM UND VERFAHREN ZUR SUCHE ÜBER VERSCHLÜSSELTE DATEN MIT EINER BOOLESCHEN SUCHANFRAGE

SYSTÈME ET PROCÉDÉ DE RECHERCHE SUR DES DONNÉES CHIFFRÉES À L'AIDE D'UNE INTERROGATION DE RECHERCHE BOOLÉENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018 Bulletin 2018/01**

(73) Proprietor: **Huawei Technologies Co., Ltd. Longgang District Shenzhen, Guangdong 518129 (CN)**

(72) Inventors:
• **GROHMANN, Bjoern 80992 Munich (DE)**
• **SCHAAD, Andreas 80992 Munich (DE)**

(74) Representative: **Gill Jennings & Every LLP SAH The Broadgate Tower 20 Primrose Street London EC2A 2ES (GB)**

(56) References cited:
• **SAMANTHA SUSAN MATHEW ET AL: "Aiding Effective Encrypted Document Manipulation Incorporated with Document Categorization Technique in Cloud", PROCEDIA COMPUTER SCIENCE, vol. 46, 2015, pages 668-675, XP055327397, AMSTERDAM, NL ISSN: 1877-0509, DOI: 10.1016/j.procs.2015.02.120**
• **JISS VARGHESE ET AL: "Homomorphic Encryption for Multi-keyword based Search and Retrieval over Encrypted Data", INTERNATIONAL JOURNAL OF APPLICATION OR INNOVATION IN ENGINEERING & MANAGEMENT (IJAIEM), vol. 3, no. 8, 31 August 2014 (2014-08-31) , pages 138-146, XP055327403, ISSN: 2319-4847**

**Description**

BACKGROUND

The present invention, in some embodiments thereof, relates to cryptography and, more specifically, but not exclusively, to systems and methods for searching over encrypted data.

Encrypted data may be stored, for example, by a user in a computing cloud. The user may perform queries, such a search, over the encrypted data to identify one or more encrypted items.

The search over the encrypted data may be performed by searching over an encrypted index associated with the encrypted data. Methods have been developed to allow the user to perform a search over the encrypted data using the encrypted index, for example, methods based on tokenization. In such methods, the plaintext is simply replaced with ciphertext in a deterministic manner, meaning that multiple encryptions of the same plaintext always result in the same ciphertext. The search token is encrypted using the same encryption mechanism used to encrypt the data being searched. The encrypted search token may be used to search over the encrypted index by finding a match between the encrypted search token and the encrypted index. In such methods however, a potential attacker may analyze the created ciphertext to learn the underlying encryption mechanism.

Samantha Susan Mathew et Al. "Aiding Effective Encrypted Document Manipulation incorporated with document categorization technique in cloud", PROCEDIA COMPUTER SIENCE, vol. 46 discloses an ecosystem where multi-keyword search can be performed by authorized data users.

SUMMARY

It is an object of the present invention to provide an apparatus, a system, a computer program product, and a method for searching over encrypted data.

The foregoing and other objects are achieved by the features of the independent claims. Further implementation forms are apparent from the dependent claims, the description and the figures.

According to a first aspect, an apparatus for searching encrypted data stored in a database using a Boolean query is configured to: receive a search query comprising a plurality of Boolean literals each representing a query item; analyze the search query to determine a predefined Boolean expression type; calculate a single query from the search query according to the determined predefined Boolean expression type; encrypt the single query; transmit the encrypted single query to a server, wherein the server applies the encrypted query to search over an encrypted index of a database of documents to create an encrypted result, wherein the encrypted index maps each of a plurality of items to at least one document in which the respective item is found; receive from the server the encrypted result; and decrypt the result to identify at least one document stored in the database of the server satisfying the search query.

Conversion of the search query into the single query based on the predefined Boolean expression types improves performance (e.g., in terms of reduced computation time, and/or reduced processing resources for performing the computation) of a computing unit executing the encrypted search operation using the encrypted single query in comparison to methods that execute the search using the original search query.

In a first possible implementation of the apparatus according to the first aspect, the Boolean expression type is selected from the group comprising at least one of: query normal form (*QNF*), disjunctive normal form (*DNF*), conjunctive normal form (*CNF*), and *OTHER,* wherein the *QNF* defines the search query according to:

$$L\_1 \mathbin{\#} ... \mathbin{\#} L\_k;$$

wherein $L_j$, for $j$ = 1, ..., $k$, denotes a Boolean literal comprising a variable or a negated variable, and # denotes logical AND or logical OR, wherein each variable of the Boolean literals appears at most once.

The *DNF* type and *CNF* type (which have approximately equal performance) provide a relatively greater improvement in performance relative to the *OTHER* type. The *QNF* type provides a relatively greater improvement in performance relative to the *DNF* type and the *CNF* type.

In a second possible implementation form of the apparatus according to the first aspect as such or according to any of the preceding implementation forms of the first aspect, the Boolean expression type consists of *OTHER,* the apparatus is further configured to calculate the single query based on the relationships:

$$q_{j_i} \leftarrow 2^i$$

$$q_l \leftarrow 0 \text{ for } l \notin \{j_0, \ldots, j_{k-1}\}$$

wherein q denotes elements of the single query.

In a third possible implementation form of the apparatus according to the second form, when the Boolean expression type consists of *OTHER,* the decrypted result is represented as vector $z_F = (z_0,\ldots,z_{n-1})^T$, the apparatus is further configured to check for i=0,...*n-1* that a certain document $d_j$ satisfies the search query if and only if:

$$z_j \in \left\{ \sum_{i=0}^{k-1} c_i 2^i \,\big|\, c_i \in \{0,1\}, F(c_0,\ldots,c_{k-1}) = 1 \right\}$$

wherein *F* denotes the Boolean function representing the single query.

In a fourth possible implementation form of the apparatus according to the first aspect as such or according to any of the preceding implementation forms of the first aspect, when the Boolean expression type consists of *CNF,* the apparatus is further configured to calculate the single query based on the relationships:

$$q_j \leftarrow (\lambda_F + 1)^s \text{ (resp. } q_j \leftarrow -(\lambda_F + 1)^s)$$

$$q_j \leftarrow 0.$$

wherein:

> $q$ denotes elements of the single query;
> $\lambda_F$ denotes the length of the longest clause of a conjunctive representation of the single query, wherein each clause denotes a disjunction of Boolean literals;
> $s = 0,\ldots r\text{-}1$.

In a fifth possible implementation form of the apparatus according to the fourth form, when the Boolean expression type consists of *CNF,* and the decrypted result is represented as vector $Z_F$, wherein:

$$\mathbf{z}_F = (z_0, \ldots, z_{n-1})^T$$

the apparatus is further configured to check for i=0,...*n-1* that a certain document $d_j$ satisfies the search query if and only if: $c_{i,s} \neq 0$ for s = 0, ..., r-1 of a list of integers $(c_{i,0},\ldots,c_{i,r-1})$ created according to the relationships:

$$z_{i,0}^\star = z_i + \sum_{s=0}^{r-1} \kappa_s (\lambda_F + 1)^s$$

and

$$c_{i,0} \equiv z_{i,0}^\star \bmod (\lambda_F + 1)$$

wherein $c_{i,0}$ represents the smallest nonnegative integer such that ; when $c_{i,0} = 0$ then document $d_j$ does not satisfy the query function, else, when *r* > 1 then

$$z_{i,1}^\star = (z_{i,0}^\star - c_{i,0})(\lambda_F + 1)^{-1}$$

$$c_{i,1} \equiv z_{i,1}^\star \bmod (\lambda_F + 1) ;$$

wherein $c_{i,1}$ denotes the smallest nonnegative integer.

In a sixth possible implementation form of the apparatus according to the first aspect as such or according to any of the preceding implementation forms of the first aspect, when the Boolean expression type consists of *DNF,* the apparatus is further configured to calculate the single query based on the relationships:

$$q_j \leftarrow (\lambda_F + 1)^s \ (\text{resp. } q_j \leftarrow -(\lambda_F + 1)^s)$$

$$q_j \leftarrow 0$$

wherein:

*q* denotes elements of the single query;
$\lambda_F$ denotes the length of the longest clause of a disjunctive representation of the single query, wherein each clause denotes a conjunction of Boolean literals;

$$s = 0,\dots \ r\text{-}1.$$

In a seventh possible implementation form of the apparatus according to the sixth form, when the Boolean expression type consists of *DNF,*
and the decrypted result is represented as vector $Z_F$, wherein:

$$\mathbf{z}_F = (z_0,\dots,z_{n-1})^T$$

the apparatus is further configured to check for i=0,...*n-1* that a certain document $d_i$ does not satisfy the search query if and only if:
$c_{i,s} \neq l_s$ for s = 0, ..., r-1 of a list of integers ($c_{i,0},...,c_{i,r-1}$) created according to the relationships:

$$z_{i,0}^\star = z_i + \sum_{s=0}^{r-1} \kappa_s (\lambda_F + 1)^s$$

and
wherein $c_{i,0}$ represents the smallest nonnegative integer such that

$$c_{i,0} \equiv z_{i,0}^\star \bmod (\lambda_F + 1)_;$$

when $c_{i,0} = l_0$ then document $d_i$ satisfies the query function, else, when r > 1 then

$$z_{i,1}^\star = (z_{i,0}^\star - c_{i,0})(\lambda_F + 1)^{-1}$$

$$c_{i,1} \equiv z_{i,1}^\star \bmod (\lambda_F + 1)_;$$

wherein $c_{i,1}$ denotes the smallest nonnegative integer.
In an eighth possible implementation form of the apparatus according to the first aspect as such or according to any of the preceding implementation forms of the first aspect, when the Boolean expression type consists of *QNF,* the apparatus is further configured to calculate the single query based on the relationships:

For $L_{i+1} = X_j$ and $F = L_0 \diamond \dots \diamond L_i \wedge L_{i+1} \diamond \dots \diamond L_{t-1}$ (where $i = 0$ or $i+1 = t-1$) set $q_j \leftarrow 1 + \tau_i + |\mu_i|$, $\tau_{i+1} \leftarrow 2\tau_i + 1 + |\mu_i|$, $\varrho_{i+1} \leftarrow \varrho_i + 1 + \tau_i + |\mu_i|$ and $\mu_{i+1} \leftarrow \mu_i,$

$$\text{For } L_{i+1} = \neg X_j \text{ and } F = L_0 \diamond \ldots \diamond L_i \wedge L_{i+1} \diamond \ldots \diamond L_{t-1} \qquad \text{set } q_j \leftarrow -1 - \tau_i - |\mu_i|,$$
$$\tau_{i+1} \leftarrow \tau_i, \; \varrho_{i+1} \leftarrow \varrho_i \text{ and } \mu_{i+1} \leftarrow \mu_i - 1 - \tau_i - |\mu_i|,$$

$$\text{For } L_{i+1} = X_j \text{ and } F = L_0 \diamond \ldots \diamond L_i \vee L_{i+1} \diamond \ldots \diamond L_{t-1} \qquad \text{set } q_j \leftarrow |\varrho_i| + |\mu_i| + 1,$$
$$\tau_{i+1} \leftarrow \tau_i + |\varrho_i| + |\mu_i| + 1, \; \varrho_{i+1} \leftarrow \varrho_i \text{ and } \mu_{i+1} \leftarrow \mu_i,$$

$$\text{for } L_{i+1} = \neg X_j \text{ and } F = L_0 \diamond \ldots \diamond L_i \vee L_{i+1} \diamond \ldots \diamond L_{t-1} \qquad \text{set } q_j \leftarrow -\varrho_i - |\mu_i| - 1,$$
$$\tau_{i+1} \leftarrow \tau_i, \; \varrho_{i+1} \leftarrow -|\mu_i| - 1 \text{ and } \mu_{i+1} \leftarrow \mu_i - \varrho_i - |\mu_i| - 1.$$

In a ninth possible implementation form of the apparatus according to the eighth form, when the Boolean expression type consists of *QNF*,
and the decrypted result is represented as vector $Z_F$, wherein:

$$\mathbf{z}_F = (z_0, \ldots, z_{n-1})^T$$

the apparatus is further configured to check that a certain document $d_i$ wherein $i \in \{0, \ldots, n\text{-}1\}$ satisfy the search query if and only if:

$$z_i \geq \varrho_{t-1};$$

wherein

$$\varrho_{t-1}$$

denotes a decryption of an encrypted value received from the server in association with the encrypted result.
In a tenth possible implementation form of the apparatus according to the first aspect as such or according to any of the preceding implementation forms of the first aspect, the encryption is performed using an encryption method supporting at least a homomorphic encryption function comprising calculation of a vector inner product on encrypted data, wherein the decrypted result of the calculation of the vector inner product is similar to calculation of a vector inner product on the unencrypted data.
In an eleventh possible implementation form of the apparatus according to the first aspect as such or according to any of the preceding implementation forms of the first aspect, the server is further configured to search the encrypted index by multiplying a matrix representation of the encrypted index by a vector representation of the encrypted single query to calculate a vector representation of the encrypted result.
In a twelfth possible implementation form of the apparatus according to the first aspect as such or according to any of the preceding implementation forms of the first aspect, the apparatus is implemented as at least one client terminal in network communication with the server.
According to a second aspect, a method searches encrypted data stored in a database using a Boolean query. The method is adapted to operate an apparatus according to the first aspect as such or according to any of the preceding forms of the first aspect.
According to a third aspect, a computer program stored on a computer readable medium runs the method according to the second aspect when executed by a processor of a computer.
Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of a method for searching encrypted data stored in a database using a Boolean query by calculating a single query from the Boolean search query according to a determined predefined Boolean expression type, in accordance with some embodiments of the present invention;

FIG. 2 is a block diagram of components of a system that searches over encrypted data instances using the encrypted single query, in accordance with some embodiments of the present invention;

FIG. 3 is a schematic representing improvement in computational performance for each of the Boolean expression types, in accordance with some embodiments of the present invention;

FIG. 4 is a block diagram of an exemplary architecture for creating a single query from a Boolean search query for searching over encrypted data instances stored in a database, in accordance with some embodiments of the present invention;

FIG. 5 is an exemplary dataflow diagram for creating a single query from a Boolean search query for searching over encrypted data instances stored in a database, in accordance with some embodiments of the present invention;

FIG. 6 is an exemplary dataflow diagram for using a single query created from a Boolean search query for searching over encrypted data instances stored in a database, in accordance with some embodiments of the present invention; and

FIG. 7 is another flowchart of an exemplary method of creating a single query from a Boolean search query for searching over encrypted data instances stored in a database, in accordance with some embodiments of the present invention.

DETAILED DESCRIPTION

The present invention, in some embodiments thereof, relates to cryptography and, more specifically, but not exclusively, to systems and methods for searching over encrypted data.

An aspect of some embodiments of the present invention relates to systems and/or methods (e.g., code instructions executed by one or more processors) that search over encrypted data using a Boolean query. A search query that includes multiple Boolean literals (each representing a query item) is analyzed to determine a predefined Boolean expression type. A single query is calculated according to the determined predefined Boolean expression type. The single query is encrypted and used to search over the encrypted data, by searching over an encrypted index associated with the encrypted data. Conversion of the search query into the single query based on the predefined Boolean expression types improves performance (e.g., in terms of reduced computation time, and/or reduced processing resources for performing the computation) of a computing unit executing the encrypted search operation using the encrypted single query in comparison, for example, to methods that execute the search using the original search query.

Optionally, the Boolean expression type is one of: query normal form (*QNF*), disjunctive normal form (*DNF*), conjunctive normal form (*CNF*), and *OTHER*. The Boolean expression types represent increasing performance improvement categories. The *DNF* type and *CNF* type (which have approximately equal performance) provide a relatively greater improvement in performance relative to the *OTHER* type. The *QNF* type provides a relatively greater improvement in performance relative to the *DNF* type and the *CNF* type.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

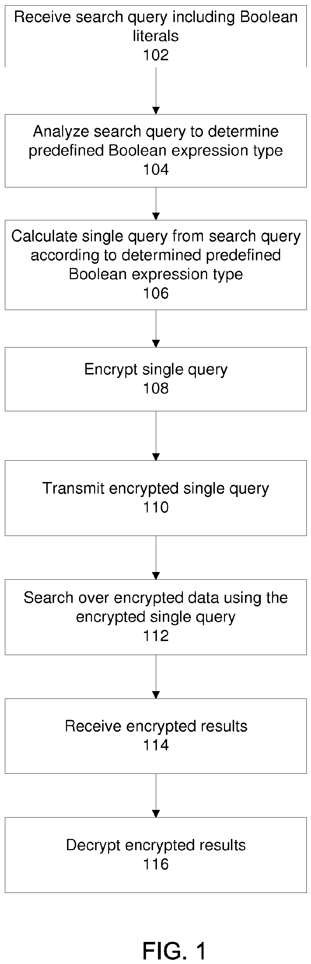

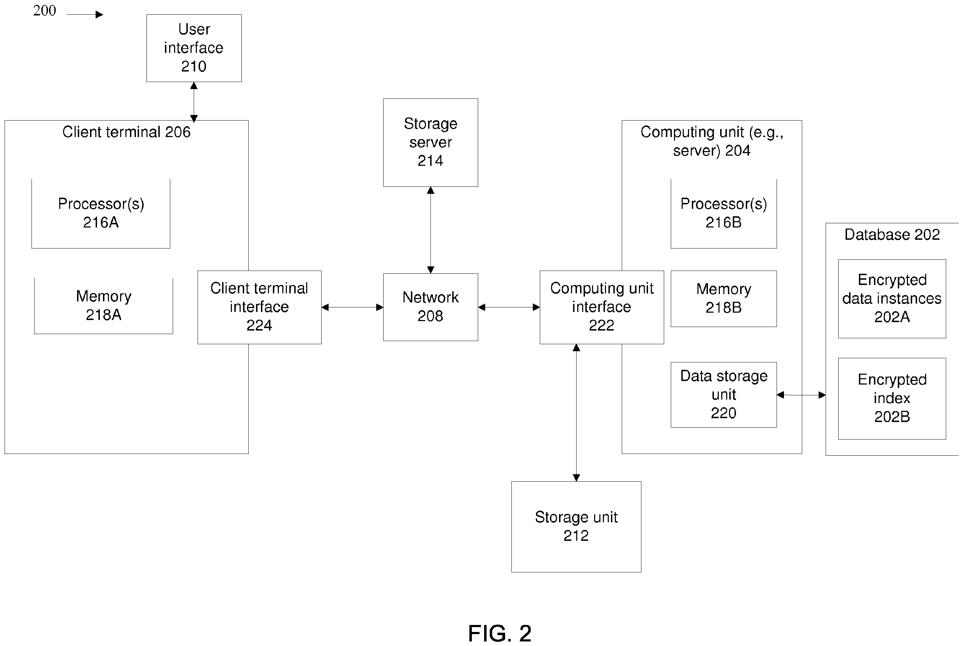

Reference is now made to FIG. 1, which is a flowchart of a method for searching encrypted data stored in a database using a Boolean query by calculating a single query from the Boolean search query according to a determined predefined Boolean expression type, in accordance with some embodiments of the present invention. Reference is also made to FIG. 2, which is a block diagram of components of a system 200 that searches over encrypted data instances using the encrypted single query, in accordance with some embodiments of the present invention. The search using the single query improves performance of system 200, for example, in comparison to performing the search using the original received Boolean search query.

The method described with reference to FIG. 1, and/or system 200 create a single (optionally nondeterministic) search query (e.g., token) from a Boolean search query that includes multiple Boolean literals according to the determined predefined Boolean expression type, which improves performance of system 200. For example, the single encrypted search query is created for a Boolean query that is designed to search for all documents (or other data instances) stored in a database that either contain some item *A* but not some other item *B* or some item C but only if item *A* is not present.

The method described with reference to FIG. 1, and/or system 200 provide an optimized mechanism to search over an encrypted index using a Boolean search query without revealing the underlying search pattern and/or the encrypted mechanism.

The method described with reference to FIG. 1, and/or system 200 may be implemented for arbitrary encrypted data searchable by an encrypted index.

Database 202 stores data instances 202A encrypted optionally using a nondeterministic encryption method. It is noted that database 202 may be initially stored locally by a client terminal 206, and/or may be remotely accessed by client terminal 206. Database 202 may be transmitted by client terminal 206 to a computing unit 204 (e.g., a server) for secure storage and for searching over encrypted data instances 202A.

The data instances may be encrypted using at least indistinguishability under chose plaintext attack (IND-CPA) secure encryption. Each data instance includes one or more data entries. The data instances may include documents, or for example, emails, word processing documents, presentations, spreadsheets, application determined database entries, records, medical records, and portable document format (PDF) files. Data instances may include files, for example, images, music files, other audio files, videos, application defined files, and other data. Data entries may be, for example, words, paragraphs, metadata, pages, and related files.

As used herein, the terms *documents,* and *data instances* may sometimes be interchanged.

The data instances may be encrypted, for example, by a user using a user interface 210 of client terminal 206, by a remote server 214, or by other computing devices external to computing unit 204. The encrypted data instances 202A may be transmitted in the encrypted state to computing unit 204 (e.g., server) for secure storage and for searching over encrypted data instances 202A. It is noted that computing unit 204 may be unaware of the plaintext of encrypted data instances 202A, and/or may be unable to decrypt encrypted data instances 202A. In another example, the data instances are encrypted by computing unit 204.

Database 202 is in association with an encrypted index 202B. Encrypted index 202B maps data items (e.g., key word(s)) to one or more encrypted data instances 202A (e.g., document(s)) in which the respective data item is found. Encrypted data instances 202A of database 202 may be searched (e.g., as described herein) by performing a search over encrypted index 202B.

Encrypted index 202B may include code that when executed performs a Boolean function that outputs a first value when a certain item is located in a certain data instance, and outputs a second value when the certain item is not located in the certain data instance.

It is noted that system 200 represents multiple architectures which may be used to implement the method of FIG. 1 for searching database 202. As described herein, database 202 stores encrypted data instances 202A, and is associated with encrypted index 202B. In one implementation, database 202 is stored on computing unit (e.g., server) 204 in communication with one or more client terminals 206 over a network 208. A user may use user interface 210 to enter a search query for searching over database 202. The results may be displayed to the user on user interface 210 (or another user interface). In another implementation, database 202 is stored externally to computing unit 204, on a locally connected storage unit 212. In yet another implementation, database 202 is stored on a remote server 214 accessed by computing unit 204. In yet another implementation, computing unit 204 performs one or more functions of client terminal 206, and is in communication with user interface 210. In such an implementation, the user may use user interface 210 to enter the search query directly into computing unit 204 (e.g., client terminal 206 and computing unit 204 are implemented as a single unit). It is noted that database 202 may be a distributed database hosted by multiple computing units 204.

Exemplary client terminal(s) 206 include: mobile device, stationary device, server, smartphone, laptop, tablet computer, wearable computing device, glasses computing device, watch computing device, desktop computer, and a kiosk.

Computing unit 204 may be implemented, for example as, a network server, a web server, a computing cloud, a local server, a remote server, or a client terminal running code. Computing unit 204 may be implemented as a hardware component (e.g., standalone computing unit), as a software component (e.g., implemented within an existing computing unit), and/or as a hardware component inserted into an existing computing unit (e.g., plug-in card, attachable unit). The server implementation may provide services to client terminals by providing software as a service (SAAS), providing an application that may be installed on the client that communicates with the server, and/or providing functions using remote access sessions.

Each client terminal 206 and computing unit 204 includes a respective processor(s) 216A-B and respective memory 218A-B for storing instruction code executable by the respective processor(s) 216A-B.

Processor(s) 216A-B may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processor(s) 216A-B may include one or more processors (homogenous or heterogeneous), which may be arranged for parallel processing, as clusters and/or as one or more multi core processing units.

Memory 218A-B store code instructions executed by respective processor(s) 216A-B, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Computing unit 204 may include a storage unit 220 that act as a data repository for storing data, for example, a memory, a hard-drive, an optical disc, a temporary storage unit, an internal storage unit, and an external (optionally removable) storage unit. Database 202 may be hosted by storage unit 220.

Computing unit 204 may include a computing unit interface 222 for communication with one or more of: client terminal 206 (via network 208 and client interface 224), remote server 214 hosting database 202 (directly via interface 222 or indirectly via network 208), and storage unit 212 hosting database 202 (directly via interface 222 or indirectly via network 208 or another communication channel). Server interface 222 may be implemented, for example, as an interface to a remote storage server, an interface to a cloud server, a network interface, and/or an interface to other storage units.

Exemplary user interface 210 (which may be integrated with a display, or be implemented as a separate device) include one or more of: a touchscreen, a keyboard, a mouse, and voice activated software operating using speakers and microphone.

Network 208 may include, for example one or more of, the internet, a local area network (LAN), a wide area network, a private network, a virtual private network (VPN), a wireless network, and a cellular network.

One or more acts of the method of FIG. 1 may be performed, for example, by processor(s) 216B of computing unit 204 executing code instructions stored in memory 218B, and/or by processor(s) 216A of client terminal 206 executing code instructions stored in memory 218A.

At 102, a search query that includes Boolean literals, each representing a query item, is received by client terminal 206, for example, the user may use user interface 210 to manually enter one or more keywords into a search applications, for example, a graphical user interface (GUI) search application. The search query is designed to search over encrypted data instances 202A, optionally using encrypted index 202B, for example, to search for the presence of documents and/or other files matching the entered keyword(s).

It is noted that the search query may be received by computing unit 204, directly from the user connecting to computing unit 204, or transmitted from client terminal 206.

At 104, client terminal 206 (and/or computing unit 204) analyzes the search query to determine a predefined Boolean expression type. The analysis may be performed, for example, by parsing the search query, applying a set-of-rules to the query, applying classification code to the query, or other categorization methods designed to classify the search query into one of the predefined Boolean expression types.

Exemplary Boolean expression types include: query normal form (*QNF*), disjunctive normal form (*DNF*), conjunctive normal form (*CNF*), and *OTHER*. The *OTHER* case represents a general catch-all category in which search queries not classified as *QNF, DNF,* or *CNF* fall into. The *OTHER* case is expected to be the most computational complex case, requiring relatively longer computation time and/or the greatest use of processing resources as compared to the other categories. The *QNF* represents a Boolean query as described herein. The *QNF* form is expected to be the most computationally efficiency case, requiring relatively shorter computation time and/or the least processing resources as compared to the other categories.

The following terms are used herein in mathematical representations:

* d denotes $(d_0,....d_{n-1})$ of data instances.

* t denotes a finite set of data items $(t_0,....t_{m-1})$, for example, key-words.

* H denotes an index $(h_{i,j}) \in R^{nxm}$.

* R denotes the ring of integers Z or a finite field $\mathbb{F}_p$, with a prime number $p > 2$, and $h_{i,j} = 1$ if and only if item $t_j$ is contained in data instance $d_i$, for $i = 0, ..., n$-1 and $j = 0,...,m$-1, else $h_{i,j} = 0$.

* F denotes the Boolean search query including Boolean literals of the form $Xj$ and $\neg Xj$, with $j \in \{0, ..., m$-1$\}$, where the occurrence of the literals $Xj$ or $\neg Xj$ indicate that data item $t_j$ must be included or respectively must not be included in the retried results.

* $q_F$ denotes a query vector created for Boolean search query F. $q_F$ is represented as $(q_0, ..., q_{m-1})^T \in R^m$.

* $z_F$ denotes the result vector, represented as $(z_0, ..., z_{n-1})^T \in R^n$.

* $z_F = Hq_F$.

* $\varepsilon 1$ and $\varepsilon 2$ denote encryption functions.

* V denotes an evaluation function.

* D denotes a decryption function using keys $k_h, k_q, k_d$.

* $D(V(\varepsilon 1(H, k_h), \varepsilon 2 (q_F, k_q)), k_d) = Hq_F$.

* $\varepsilon 1(H, k_h)$ may be a mathematical representation of encrypted index 202B.

* $\varepsilon 2(q_F, k_q)$ may be a mathematical representation of the encrypted single query, as described with reference to block 108 of FIG. 1.

* $V(\varepsilon 1(H, k_h), \varepsilon 2(q_F, k_q))$ may be a mathematical representation of as the encrypted results obtained by searching over the encrypted data using the encrypted single query, as described with reference to block 114 of FIG. 1.

* D and $k_d$ may be used to decrypt the results by computing result vector $z_F$, which may be used to select which encrypted data instances to retrieve, as described with reference to block 116 of FIG. 1.

It is noted that the system and/or method described herein may be used with different encrypted indexes and query vectors.

When the search query is determined to belong to the *CNF* category, an assumption is made that each variable $X_j$ of F, where $j \in \{0,..., m$ - 1$\}$, appears at most once. F may be represented as $F = K_0 \wedge ... \wedge K_{r-1}$, where each clause $Ks$, for $s = 0,...r$-1 is a disjunction of literals represented as $K_s = (L_{s,0} \vee ... \vee L_{s,ls-1})$. For each clause $K_s$ with $s = 0,...r$-1, integer $\kappa_s$ denotes the number of negative literals of the form $\neg Xj$ in $K_s$. $\lambda_F$ denotes the length of the longest clause represented as $\max(l_0,...l_{r-1})$.

When the search query is determined to belong to the *DNF* category, an assumption is made that each variable $X_j$ of F, where $j \in \{0,..., m$ - 1$\}$, appears at most once. F may be represented as $F = K_0 \vee ... \vee K_{r-1}$, where each clause $K_s$, for $s = 0,...r$-1 is a conjunctions of literals represented as $K_s = (L_{s,0} \wedge...\wedge L_{s,ls-1})$. For each clause $K_s$ with $s = 0,...r$-1, integer $\kappa_s$ denotes the number of negative literals of the form $\neg Xj$ in $K_s$. $\lambda_F$ denotes the length of the longest clause represented as $\max(l_0,...l_r$-1$)$.

When search query is determined to belong to the *QNF* category, an assumption is made that each variable $X_j$ of F, where $j \in \{0,..., m$ - 1$\}$, appears at most once. *QNF* may be determined according to the relationships:

$$F = L\_1 \,\#\, ... \,\#\, L\_k;$$

where $L_j$, for $j$ = 1, ..., $k$, denotes a Boolean literal comprising a variable or a negated variable (which may be a Boolean function without brackets), and
# denotes logical AND or logical OR.

At 106, client terminal 206 (or computing unit 204) calculates a single query from the search query according to the determined predefined Boolean expression type.

The single query for the *OTHER* case is calculated for the search query represented by $F$, where $F$ denotes an arbitrary query function having variables $X_{j0}, ... X_{jk-1}$ denoted as $F(X_{j0}, ... X_{jk-1})$ with pairwise different $j_i \in \{0, ..., m - 1\}$, for $i$ = 0,...,$k$ - 1.

For purposes of explanation, the element 0 or 1 of $R$ are respectively assigned the values of *false* and *true*, which defines $F$ as a function having domain $\{0,1\}^k$ and range $\{0,1\}$.

When the Boolean expression type is classified into *OTHER,* the single query is calculated. The single query may be represented as a vector $q_F = (q_0, ..., q_{m-1})^T$.

The single query may be determined based on the relationships, by setting for $i$ = 0, ... $k$-1, where $q$ denotes elements of the single query vector $q_F$ :

$$q_{j_i} \leftarrow 2^i$$

$$q_l \leftarrow 0 \text{ for } l \notin \{j_0, \ldots, j_{k-1}\}$$

When the Boolean expression type is classified into the category *CNF,* the single query is calculated. The single query may be represented as a vector $q_F = (q_0, ..., q_{m-1})^T$. The single query may be created, by setting, for $j$=0, ..., $m$ -1:

$$q_j \leftarrow (\lambda_F + 1)^s$$

for clause $K_s$ of the form $Xj$,

$$(\ q_j \leftarrow -(\lambda_F + 1)^s)$$

for clause $K_s$ of the form ¬$Xj$ ,

$$q_j \leftarrow 0$$

where:

$q$ denotes elements of the single query,
$\lambda_F$ denotes the length of the longest clause of a conjunctive representation of the single query, where each clause denotes a disjunction of Boolean literals, $s$ = 0,... $r$-1.

In the case that R is a finite field $\mathbb{F}_p$ with a prime $p,$ the representation

$$\mathbb{F}_p = \{-(p-1)/2,\ldots,-1,0,1,\ldots,(p-1)/2\}$$

is used, or else, set $q_j \leftarrow 0$.

When the Boolean expression type is classified into the *DNF* category, the single query is calculated. The single query may be represented as a vector $q_F = (q_0, ..., q_{m-1})^T$. The single query may be created, by setting, for $j$=0,..., $m$-1:

$$q_j \leftarrow (\lambda_F + 1)^s$$

for clause $K_s$ of the form $Xj$,

$$( \quad q_j \leftarrow -(\lambda_F + 1)^s )$$

for clause $K_s$ of the form $\neg Xj$,

$$q_j \leftarrow 0$$

where:

> $q$ denotes elements of the single query,
> $\lambda_F$ denotes the length of the longest clause of a conjunctive representation of the single query, where each clause denotes a disjunction of Boolean literals,
> $s = 0,...$ $r$-1.

In the case that $R$ is a finite field $\mathbb{F}_p$ with a prime $p$, the representation

$$\mathbb{F}_p = \{-(p-1)/2,\ldots,-1,0,1,\ldots,(p-1)/2\}$$

is used, or else, set $q_j \leftarrow 0$.

When the Boolean expression type is classified into the *QNF* category, the single query is calculated. The single query may be represented as a vector $q_F = (q_0, ..., q_{m-1})^T$.

A set of variables is defined: $\{\tau_0, ..., \tau_{t-1}, \rho_0, ..., \rho_{t-1}, \mu_0, ..., \mu_{t-1}\}$. Search query $F$ is parsed (e.g., from left to right starting with $L_0$). If literal $L_0$ is of the form $X_j$ (where $j \in \{0,...,m-1\}$), set $q_j=1$, $\tau_0 = 1$, $\rho_0 = 1$ and $\mu_0 = 0$. Else when the literal $L_0$ is of the form $\neg X_j$, set $q_j=-1$, $\tau_0 = 0$, $\rho_0 = 0$ and $\mu_0 = -1$. In the case that $R$ is a finite field $\mathbb{F}_p$ with a prime $p$, the representation

$$\mathbb{F}_p = \{-(p-1)/2,\ldots,-1,0,1,\ldots,(p-$$

$$1)/2\}$$

is used.

When $t > 1$, for $i \in \{0, ..., t - 2\}$, variables $\tau_i$, $\rho_i$, and $\mu_i$ are already set.

Depending on the literal $L_{i+1}$, the following cases are defined:

> For $L_{i+1} = X_j$ and $F = L_0 \diamond \ldots \diamond L_i \wedge L_{i+1} \diamond \ldots \diamond L_{t-1}$ (where $i = 0$ or $i+1 = t-1$) set $q_j \leftarrow 1 + \tau_i + |\mu_i|$, $\tau_{i+1} \leftarrow 2\tau_i + 1 + |\mu_i|$, $\varrho_{i+1} \leftarrow \varrho_i + 1 + \tau_i + |\mu_i|$ and $\mu_{i+1} \leftarrow \mu_i$,

> For $L_{i+1} = \neg X_j$ and $F = L_0 \diamond \ldots \diamond L_i \wedge L_{i+1} \diamond \ldots \diamond L_{t-1}$ set $q_j \leftarrow -1 - \tau_i - |\mu_i|$, $\tau_{i+1} \leftarrow \tau_i$, $\varrho_{i+1} \leftarrow \varrho_i$ and $\mu_{i+1} \leftarrow \mu_i - 1 - \tau_i - |\mu_i|$,

$$\text{For } L_{i+1} = X_j \text{ and } F = L_0 \diamond \ldots \diamond L_i \vee L_{i+1} \diamond \ldots \diamond L_{t-1} \qquad \text{set } q_j \leftarrow |\varrho_i| + |\mu_i| + 1,$$
$$\tau_{i+1} \leftarrow \tau_i + |\varrho_i| + |\mu_i| + 1, \; \varrho_{i+1} \leftarrow \varrho_i \text{ and } \mu_{i+1} \leftarrow \mu_i,$$

$$\text{for } L_{i+1} = \neg X_j \text{ and } F = L_0 \diamond \ldots \diamond L_i \vee L_{i+1} \diamond \ldots \diamond L_{t-1} \qquad \text{set } q_j \leftarrow -\varrho_i - |\mu_i| - 1,$$
$$\tau_{i+1} \leftarrow \tau_i, \; \varrho_{i+1} \leftarrow -|\mu_i| - 1 \text{ and } \mu_{i+1} \leftarrow \mu_i - \varrho_i - |\mu_i| - 1.$$

The calculations are performed until $i+1 = t$-1. Other elements of $q_F$ that have not been set are set to 0.

At 108, the single query is encrypted by client terminal 206 (or by computing unit 204).

The encryption may be performed using an encryption method supporting at least a homomorphic encryption function that calculates a vector inner product of encrypted data, to allow searching by calculation of the vector inner product of the encrypted vector single query and the encrypted index (which may be represented as a vector or matrix).

Optionally, at 110, the encrypted single query is transmitted by client terminal 206 to computing unit 204.

At 112, computing unit 204 applies the encrypted query to search over encrypted index 202B of database 202 storing encrypted data instances 202A (e.g., documents) to create an encrypted result. It is noted that the encrypted single query may be used to search directly over encrypted data instance 202A, for example, in implementations without encrypted index 202B.

Optionally, (when the homomorphic encryption mechanism is used to encrypt the single query as described with reference to block 108), computing unit 204 may search encrypted index 202B by multiplying a matrix representation of encrypted index 202B by the vector representation of the encrypted single query to calculate the vector representation of the encrypted result.

Optionally, at 114, client terminal 206 receives the encrypted result from computing unit 204.

At 116, client terminal 206 decrypts the encrypted result received from computing unit 204. The decrypted result is used to identify one or more data instances (e.g., document(s) stored in database 202 satisfying the search query). One or more of the identified data instances may be retrieved by client terminal 206 and decrypted. The decrypted data instances may be presented on the display of client terminal 206, stored on client terminal 206, and/or transmitted (e.g., to another computing unit and/or storage unit).

Optionally, the result is decrypted by calculating the vector inner product in a manner that is similar to calculation of the vector inner product on the unencrypted data.

When the Boolean expression type of the search query received in block 102 is classified as *OTHER,* the decrypted result is represented as a vector, which may be defined as $z_F = (z_0,...,z_{n-1})^T$. Client terminal 206 checks for $j=0,...n$-1 that a certain encrypted data instance (e.g., document) $d_j$ satisfies the search query if and only if:

$$z_j \in \left\{ \sum_{i=0}^{k-1} c_i 2^i \mid c_i \in \{0,1\}, F(c_0, \ldots, c_{k-1}) = 1 \right\}$$

where $F$ denotes the Boolean function representing the single query.

In the case that $R$ is a finite field $\mathbb{F}_p$, then prime $p$ may satisfy $\log_2 p \geq k$ to avoid false positives.

When the Boolean expression type is classified as *CNF,* the decrypted result may be represented as vector $z_F = (z_0,...,z_{n-1})^T$. Client terminal 206 may check for $i = 0,...n - 1$ that a certain data instance (e.g., document) $d_i$ satisfies the search query by computing:

$$z_{i,0}^\star = z_i + \sum_{s=0}^{r-1} \kappa_s (\lambda_F + 1)^s$$

where $c_{i,0}$ represents the smallest nonnegative integer such that

$$c_{i,0} \equiv z_{i,0}^\star \bmod (\lambda_F + 1)$$

when $c_{i,0} = 0$ then data instance (e.g., document) $d_i$ does not satisfy the query function, else, when $r > 1$ then computing the next value:

$$z_{i,1}^{\star} = (z_{i,0}^{\star} - c_{i,0})(\lambda_F + 1)^{-1}$$

where $c_{i,1}$ denotes the smallest nonnegative integer subject to the relationship:

$$c_{i,1} \equiv z_{i,1}^{\star} \bmod (\lambda_F + 1) \, .$$

The calculations are performed to generate a list of integers $(c_{i,0}, ..., c_{i,r-1})$. Data instance (e.g., document) $d_i$ satisfies search query $F$ if and only if:

$$c_{i,s} \neq 0$$

for $s = 0, ..., r\text{-}1$.

In the case that $R$ is a finite field $\mathbb{F}_p$, then prime $p$ may satisfy $\log_2 p \geq r \log_2(\lambda_F+1)$ to avoid false positives.

When the Boolean expression type consists of *DNF,* the decrypted result may be represented as vector $z_F = (z_0, ..., z_{n-1})^T$. Client terminal 206 may check for $i = 0, ...n - 1$ that a certain data instance (e.g., document) $d_i$ satisfies the search query by computing:

$$z_{i,0}^{\star} = z_i + \sum_{s=0}^{r-1} \kappa_s (\lambda_F + 1)^s$$

wherein $c_{i,0}$ represents the smallest nonnegative integer such that

$$c_{i,0} \equiv z_{i,0}^{\star} \bmod (\lambda_F + 1)$$

when $c_{i,0} = l_0$ then document $d_i$ satisfies the query function. Else, when $r > 1$ the next value is computing using the relationship:

$$z_{i,1}^{\star} = (z_{i,0}^{\star} - c_{i,0})(\lambda_F + 1)^{-1}$$

where $c_{i,1}$ denotes the smallest nonnegative integer subject to:

$$c_{i,1} \equiv z_{i,1}^{\star} \bmod (\lambda_F + 1)$$

The calculations are performed to generate a list of integers

$$(c_{i,0}, \ldots, c_{i,r-1}) \, .$$

Client terminal 206 determines that a certain data instance (e.g., document) $d_i$ does not satisfy the search query $F$ if and only if:

$$c_{i,s} \neq l_s$$

for $s = 0, ..., r\text{-}1.$

In the case that $R$ is a finite field $\mathbb{F}_p$, then prime $p$ may satisfy $\log_2 p \geq r \log_2(\lambda_F+1)$ to avoid false positives.

When the Boolean expression type consists of *QNF,* the decrypted result may be represented as vector $z_F = (z_0,...,z_{n-1})^T$. Data instance (e.g., document) $d_i$ (where $i \in \{0,..., n\text{-}1\}$) satisfies the search query *F* if and only if:

$$z_i \geq \varrho_{t-1}$$;

where

$$\varrho_{t-1}$$

denotes a decryption of an encrypted value received from computing unit 204 in association with the encrypted result.

In the case that *R* is a finite field $\mathbb{F}_p$, the condition may be represented as:

$$(p-1)/2 \geq z_i \geq \varrho_{t-1}$$.

Prime *p* may satisfy $\log_2 p \geq t + 1$ to avoid false positives.

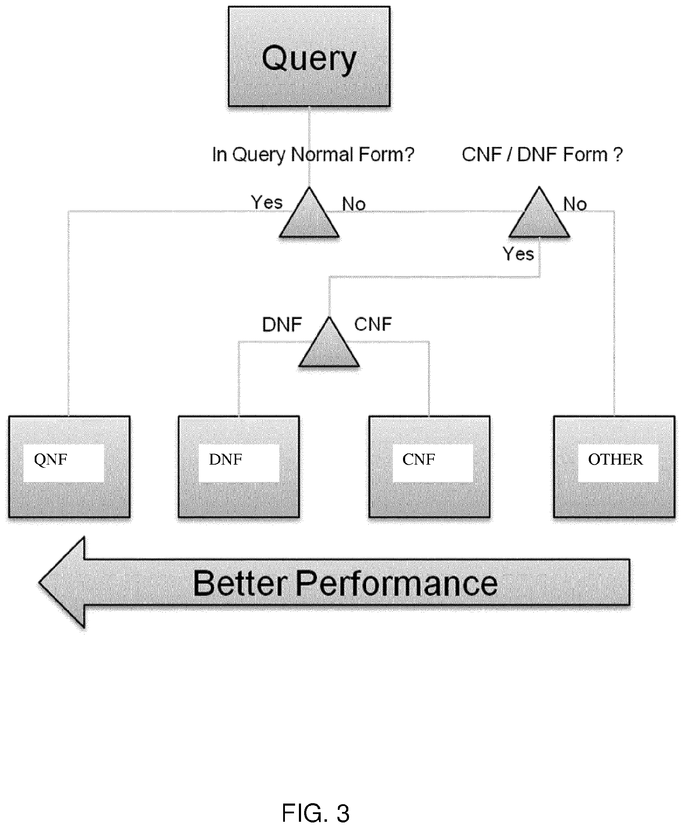

Reference is now made to FIG. 3, which is a schematic representing improvement in computational performance for each of the Boolean expression types, in accordance with some embodiments of the present invention. The number of operations for the Boolean expression type *OTHER* is determined to be linear in p(O(*p*)). The number of operations for the Boolean expression types *CNF* and *DNF* are determined to be linear in (logp(O(*p*)). The Boolean expression type *QNF* is based on a constant number of comparisons, and provides the greatest improvement in computational performance.

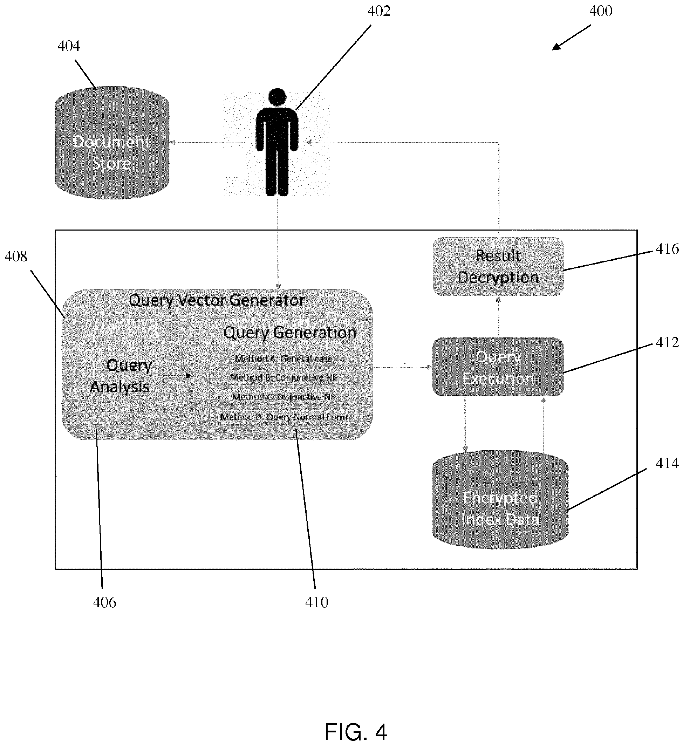

Reference is now made to FIG. 4, which is a block diagram of an exemplary architecture 400 for creating a single query from a Boolean search query for searching over encrypted data instances stored in a database, in accordance with some embodiments of the present invention. Architecture 500 may represent an exemplary implementation based on FIG. 1, and/or based on system 200 of FIG. 2.

A user uses a client terminal 402 to enter a search query for searching over encrypted data stored in document store 404, for example, "all my files over 1 megabyte AND file type ppt OR xls". The search query is resolved by Query Analysis code 406 component of Query Vector Generator 408 which classifies the search query into one Boolean expression type: *OTHER, CNF, DNF,* or *QNF.* Query Generation code 410 creates the single query according to the determined Boolean expression type. The created query is used by Query Execution code 412 to search over Encrypted Index 414. The results are decrypted by Result Decryption code 416, and used by client terminal 402 to retrieve the desired document(s) from document store 404.

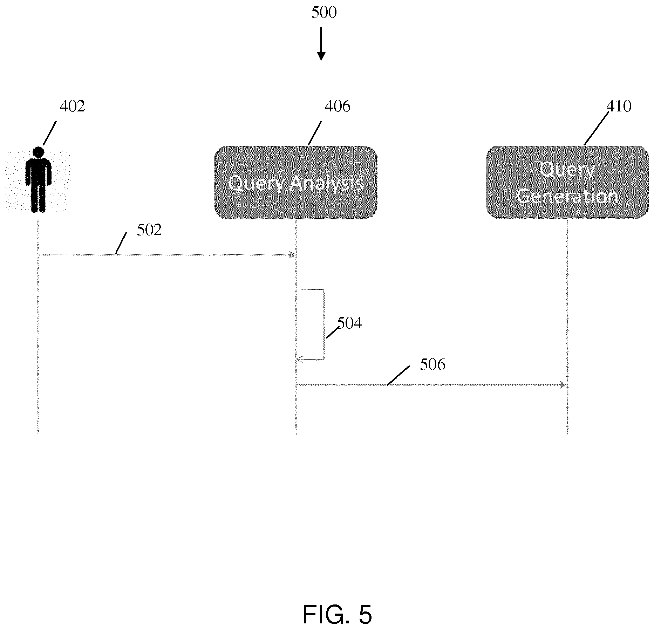

Reference is now made to FIG. 5, which is an exemplary dataflow diagram 500 for creating a single query from a Boolean search query for searching over encrypted data instances stored in a database, in accordance with some embodiments of the present invention. Dataflow diagram 500 may represent an exemplary implementation based on FIG. 1, and/or based on system 200 of FIG. 2, and/or based on architecture 400 of FIG. 4. Components are numbered and are as described with reference to FIG. 4.

At 502, a user uses client terminal 402 to enter a search query, for example, one or more keywords. The search query is received by Query Analysis code 406.

At 504, Query Analysis code 406 parses the received query and classifies the query into one of the Boolean expression types: *OTHER, CNF, DNF,* or *QNF.*

At 506, the determined Boolean expression type and the search query are transmitted to Query Generation code 410.

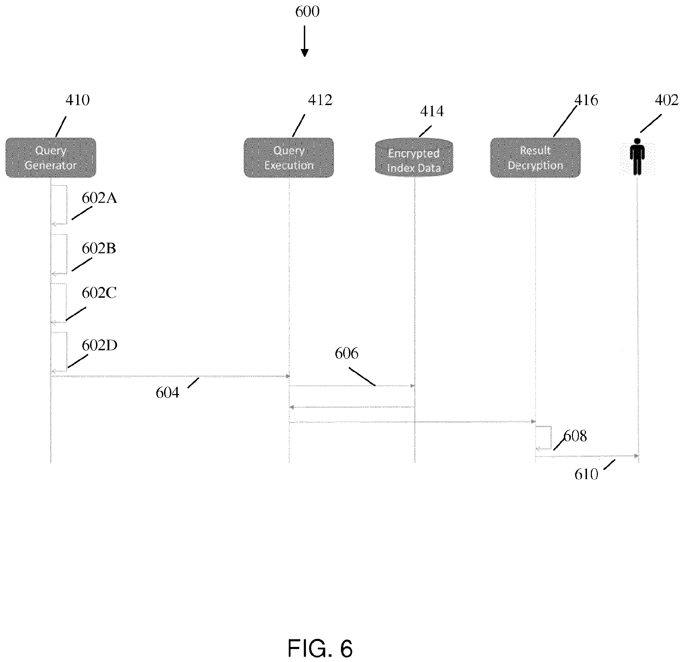

Reference is now made to FIG. 6, which is an exemplary dataflow diagram 600 for using a single query created from a Boolean search query for searching over encrypted data instances stored in a database, in accordance with some embodiments of the present invention. Dataflow diagram 600 may represent an exemplary implementation based on FIG. 1, and/or based on system 200 of FIG. 2, and/or based on architecture 400 of FIG. 4, and/or based on dataflow diagram 500 of FIG. 5. Components are numbered and are as described with reference to FIG. 4.

At one of 602A-D, Query Generator code 410 creates the single query according to the determined Boolean expression type.

At 604, the created single query is transmitted to Query Execution code 412.

At 606, Query Execution code 412 applies the single query to Encrypted Index 414, for example, by multiplying a vector representation of the single query by a matrix representation of Encrypted Index 414.

At 608, Result Decryption code 416 decrypts the results.

At 610, the decrypted results are presented to the user on client terminal 402. The user may retrieve documents from the database according to the presented decrypted results.

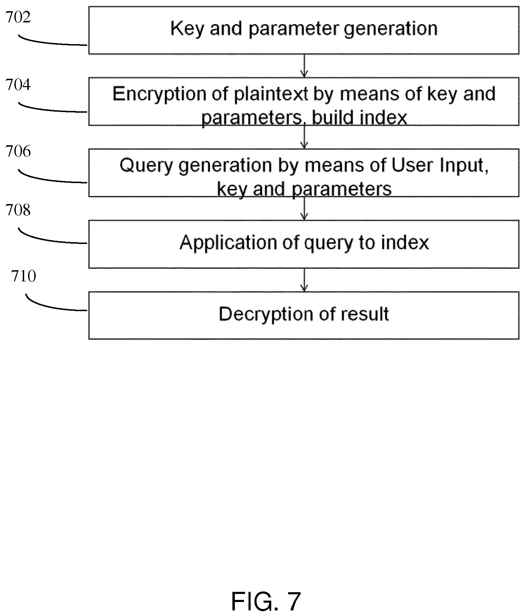

Reference is now made to FIG. 7, which is another flowchart of an exemplary method of creating a single query from a Boolean search query for searching over encrypted data instances stored in a database, in accordance with some embodiments of the present invention. The method described with reference to FIG. 7 may be implemented by system 200 described with reference to FIG. 2.

At 702, keys and parameters (as described herein) are generated, for example, by a client terminal, or a security server, or other computing unit.

At 704, a plaintext index that maps data items to data instances stored in a database is encrypted using the key and parameters, as described herein.

At 706, a search query including multiple Boolean literals for searching over the encrypted data stored in the database is received from the user, converted to the single query format, and encrypted, as described herein.

At 708, the encrypted single query is applied to the encrypted index to generated encrypted results, as described herein.

At 710, the encrypted results are decrypted, as described herein.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant databases storing encrypted data instances will be developed and the scope of the term database and the term encrypted data instance is intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

**Claims**

1. A computer apparatus for searching encrypted data stored in a database using a Boolean query, wherein the apparatus is configured to:

   receive a search query comprising a plurality of Boolean literals each comprising a variable or a negated variable, wherein the occurrence of a variable indicates that a query data item corresponding to the variable is to be included, and the occurrence of a negated variable indicates that a query data item corresponding to the variable is not to be included, each query data item being one of a finite set of possible data items;
   analyze the search query to determine a Boolean expression type of the search query among a group of predefined Boolean expression types comprising at least one of: query normal form, QNF, disjunctive normal form, DNF, conjunctive normal form, CNF, and OTHER;
   calculate a vector single query from the search query with a vector element for each of the possible data items having a value representing a data item of the search query according to the 15 determined Boolean expression type of the search query;
   encrypt the vector single query;
   transmit the encrypted vector single query to a server, wherein the server applies the encrypted vector single query to search over an encrypted index of a database of documents to create an encrypted result, wherein the encrypted index maps each of the finite set of possible data items to at least one document in which the respective data item is found and wherein the encryption is performed using an encryption method supporting a homomorphic encryption function that calculates a vector inner product of encrypted data, to allow searching by calculation of the vector inner product of the encrypted vector single query and the encrypted index;
   receive from the server the encrypted result; and
   decrypt the result to identify at least one document stored in the database of the server satisfying the search query, wherein the QNF defines the search query according to:
   $L_1 \# ... \# L_k$;
   wherein $L_j$, for j = 1, ..., k, denotes a Boolean literal, and
   # denotes logical AND or logical OR, wherein each variable of the Boolean literals appears at most once.

2. The apparatus according to any of the previous claims, wherein when the Boolean expression type consists of OTHER, the apparatus is further configured to calculate the vector single query based on the relationships:

$$q_{j_i} \leftarrow 2^i$$

$$q_l \leftarrow 0 \text{ for } l \notin \{j_0, \ldots, j_{k-1}\}$$

   wherein q denotes elements of the vector single query.

3. The apparatus according to claim 2, wherein when the Boolean expression type consists of OTHER, the decrypted result is represented as vector $z_F = (z_0,...,z_{n-1})^T$, the apparatus is further configured to check for j=0,...n-1 that a certain document dj satisfies the search query if and only if:

$$z_j \in \left\{ \sum_{i=0}^{k-1} c_i 2^i \mid c_i \in \{0,1\}, F(c_0, \ldots, c_{k-1}) = 1 \right\}$$

   wherein F denotes the Boolean function representing the vector single query.

4. The apparatus according to any of the previous claims, wherein when the Boolean expression type consists of CNF in which each variable of the search query appears at most once, the apparatus is further configured to calculate the vector single query based on the relationships:

$$q_j \leftarrow (\lambda_F + 1)^s \text{ (resp. } q_j \leftarrow -(\lambda_F + 1)^s)$$

for clause $K_S$ of the form $X_j$ (resp. $-X_j$)

$$q_j \leftarrow 0.$$

wherein:

$X_j$, $-X_j$ denote the Boolean literals in the search query
q denotes elements of the vector single query;
$\lambda_F$ denotes the length of the longest clause of a conjunctive representation of the single query, wherein each clause $K_S$ denotes a disjunction of Boolean literals;
s = 0,... r-1.

5. The apparatus of claim 4, wherein when the Boolean expression type consists of CNF, and the decrypted result is represented as vector $Z_F$, wherein:

$$\mathbf{z}_F = (z_0, \ldots, z_{n-1})^T$$

the apparatus is further configured to check for i=0,...n-1 that a certain document $d_i$ satisfies the search query if and only if:
$c_{i,s} \neq 0$ for s = 0, ..., r-1 of a list of integers $(c_{i,0},...,c_{i,r-1})$ created according to the relationships:

$$z_{i,0}^{\star} = z_i + \sum_{s=0}^{r-1} \kappa_s (\lambda_F + 1)^s$$

and
wherein $c_{i,0}$ represents the smallest nonnegative integer such that

$$c_{i,0} \equiv z_{i,0}^{\star} \bmod (\lambda_F + 1)_;$$

when $c_{i,0}$ = 0 then document di does not satisfy the query function, else, when r > 1 then

$$z_{i,1}^{\star} = (z_{i,0}^{\star} - c_{i,0})(\lambda_F + 1)^{-1}$$

$$c_{i,1} \equiv z_{i,1}^{\star} \bmod (\lambda_F + 1)_;$$

wherein $c_{i,1}$ denotes the smallest nonnegative integer.

6. The apparatus according to any of the previous claims, wherein when the Boolean expression type consists of DNF in which each variable of the search query appears at most once, the apparatus is further configured to calculate the vector single query

$$q_j \leftarrow (\lambda_F + 1)^s \ (\text{resp.} \ q_j \leftarrow -(\lambda_F + 1)^s)$$

for clause $K_S$ of the form $X_j$ (resp. $-X_j$)

$$q_j \leftarrow 0$$

based on the relationships:
wherein:

$X_j$, -$X_j$ denote the Boolean literals in the search query
q denotes elements of the vector single query;
$\lambda_F$ denotes the length of the longest clause of a disjunctive representation of the vector single query, wherein each clause denotes a conjunction of Boolean literals;

$$s = 0,\dots r\text{-}1.$$

7. The apparatus of claim 6, wherein when the Boolean expression type consists of DNF, and the decrypted result is represented as vector $Z_F$, wherein:

$$\mathbf{z}_F = (z_0, \dots, z_{n-1})^T$$

the apparatus is further configured to check for i=0,...n-1 that a certain document $d_i$ does not satisfy the search query if and only if:
$c_{i,s} \neq l_s$ for s = 0, ..., r-1 of a list of integers $(c_{i,0},...,c_{i,r-1})$ created according to the relationships:

$$z_{i,0}^\star = z_i + \sum_{s=0}^{r-1} \kappa_s(\lambda_F + 1)^s$$

and
wherein ci,0 represents the smallest nonnegative integer such that

$$c_{i,0} \equiv z_{i,0}^\star \bmod (\lambda_F + 1)_;$$

when $c_{i,0} = l_0$ then document $d_i$ satisfies the query function, else, when r > 1 then

$$z_{i,1}^\star = (z_{i,0}^\star - c_{i,0})(\lambda_F + 1)^{-1}$$

$$c_{i,1} \equiv z_{i,1}^\star \bmod (\lambda_F + 1)_;$$

wherein $c_{i,1}$ denotes the smallest nonnegative integer.

8. The apparatus according to any of the previous claims, wherein when the Boolean expression type consists of QNF, the apparatus is further configured to calculate the vector single query based on the relationships:

If literal $L_0$ is of the form $X_j$ then set qj=1, $\tau_0 = 1$, $\rho_0 = 1$ and $\mu_0 = 0$, else literal $L_0$ is of the form ~$X_j$, set qj=-1, $\tau_0 = 0$, $\rho_0 = 0$ and $\mu_0 = -1$,
For $L_{i+1} = X_j$ and $F = L_0 \diamond \dots \diamond L_i \wedge L_{i+1} \diamond \dots \diamond L_{t-1}$ (where $i = 0$ or $i + 1 = t - 1$) set $q_j \leftarrow 1 + \tau_i + |\mu_i|$, $\tau_{i+1} \leftarrow 2\tau_i + 1 + |\mu_i|$,

$$\varrho_{i+1} \leftarrow \varrho_i + 1 + \tau_i + |\mu_i|$$

and $\mu_{i+1} \leftarrow \mu_i$.
For $L_{i+1} = \neg X_j$ and $F = L_0 \diamond \dots \diamond L_i \wedge L_{i+1} \diamond \dots \diamond L_{t-1}$ set $q_j \leftarrow -1 - \tau_i - |\mu_i|$, $\tau_{i+1} \leftarrow \tau_i$,

$$\varrho_{i+1} \leftarrow \varrho_i$$

and $\mu_{i+1} \leftarrow \mu_i - 1 - \tau_i - |\mu_i|$,
For $L_{i+1} = X_j$ and $F = L_0 \diamond \dots \diamond L_i \vee L_{i+1} \diamond \dots \diamond L_{t-1}$ set

$$q_j \leftarrow |\varrho_i| + |\mu_i| + 1,$$

$$\varrho_{i+1} \leftarrow \varrho_i$$

$$\tau_{i+1} \leftarrow \tau_i + |\varrho_i| + |\mu_i| + 1,$$

and $\mu_{i+1} \leftarrow \mu_i$,
for $L_{i+1} = \neg X_j$ and $F = L_0 \diamond ... \diamond L_i \vee L_{i+1} \diamond ... \diamond L_{t-1}$ set

$$q_j \leftarrow -\varrho_i - |\mu_i| - 1,$$

$\tau_{i+1} \leftarrow \tau_i$, $\tau_{i+1} \leftarrow \tau_i$,

$$\varrho_{i+1} \leftarrow -|\mu_i| - 1$$

and

$$\mu_{i+1} \leftarrow \mu_i - \varrho_i - |\mu_i| - 1.$$

9. The apparatus of claim 8, wherein when the Boolean expression type consists of QNF, and the decrypted result is represented as vector $Z_F$, wherein:

$$\mathbf{z}_F = (z_0, \ldots, z_{n-1})^T$$

the apparatus is further configured to check that a certain document $d_i$ wherein $i \in \{0,..., n\text{-}1\}$ satisfy the search query if and only if:

$$z_i \geq \varrho_{t-1}.$$

wherein

$$\varrho_{t-1}$$

denotes a decryption of an encrypted value received from the server in association with the encrypted result.

10. The apparatus according to any of the previous claims, wherein the server is further configured to search the encrypted index by multiplying a matrix representation of the encrypted index by a vector representation of the encrypted single query to calculate a vector representation of the encrypted result.

11. The apparatus according to any of the previous claims, wherein the apparatus is implemented as at least one client terminal in network communication with the server.

12. A computer implemented method for searching encrypted data stored in a database using a Boolean query, wherein the method comprises the steps of:

receiving a search query comprising a plurality of Boolean literals each comprising a variable or a negated variable, wherein the occurrence of a variable indicates that a query data item corresponding to the variable is to be included, and the occurrence of a negated variable indicates that a query data item corresponding to the variable is not to be included, each query data item being one of a finite set of possible data items;

analysing the search query to determine a Boolean expression type of the search query among a group of predefined Boolean expression types comprising at least one of: query normal form, QNF, disjunctive normal form, DNF, conjunctive normal form, CNF, and OTHER;

calculating a vector single query from the search query with a vector element for each of the possible data items having a value representing a data item of the search query according to the determined Boolean expression type of the search query;

encrypting the vector single query;

transmitting the encrypted vector single query to a server, wherein the server applies the encrypted vector single query to search over an encrypted index of a database of documents to create an encrypted result, wherein the encrypted index maps each of the finite set of possible data items to at least one document in which the respective data item is found and wherein the encryption is performed using an encryption method supporting a homomorphic encryption function that calculates a vector inner product of encrypted data, to allow searching by calculation of the vector inner product of the encrypted vector single query and the encrypted index;

receiving from the server the encrypted result; and

decrypting the result to identify at least one document stored in the database of the server satisfying the search query,

wherein the QNF defines the search query according to: $L_1$ # ... # $L_k$; wherein $L_j$ , for j = 1, ..., k, denotes a Boolean literal, and # denotes logical AND or logical OR, wherein each variable of the Boolean literals appears at most once.

13. A computer program stored on a computer readable medium that runs the preceding method when executed by a processor of a computer.

## Patentansprüche

1. Computervorrichtung zum Durchsuchen von verschlüsselten Daten, die in einer Datenbank gespeichert sind, unter Verwendung einer Boole'schen Abfrage, wobei die Vorrichtung ausgelegt ist zum:

Empfangen einer Suchabfrage, die mehrere Boole'sche Literale umfasst, die jeweils eine Variable oder eine negierte Variable umfassen, wobei das Auftreten einer Variablen angibt, dass ein Abfragedatenposten, der der Variablen entspricht, einbezogen werden muss, und das Auftreten einer negierten Variablen angibt, dass ein Abfragedatenposten, der der Variablen entspricht, nicht einbezogen werden soll, wobei jeder Abfragedatenposten einer aus einer endlichen Menge von möglichen Datenposten ist;

Analysieren der Suchabfrage zum Bestimmen einer Boole'sche-Ausdruck-Art der Suchabfrage unter einer Gruppe von vordefinierten Boole'scher-Ausdruck-Arten, die mindestens eine der Folgenden umfasst: eine Abfragenormalform, QNF, eine Disjunktivnormalform, DNF, eine Konjunktivnormalform, CNF, und SONST;

Berechnen einer Vektoreinzelabfrage aus der Suchabfrage mit einem Vektorelement für jeden der möglichen Datenposten, das einen Wert aufweist, der einen Datenposten der Suchabfrage gemäß der bestimmten Boole'scher-Ausdruck-Art der Suchabfrage repräsentiert;

Verschlüsseln der Vektoreinzelabfrage;

Übermitteln der verschlüsselten Vektoreinzelabfrage an einen Server, wobei der Server die verschlüsselte Vektoreinzelabfrage auf eine Suche über einen verschlüsselten Index einer Datenbank von Dokumenten hinweg anwendet, um ein verschlüsseltes Ergebnis zu erstellen, wobei der verschlüsselte Index jeden aus der endlichen Menge von möglichen Datenposten auf mindestens ein Dokument abbildet, in dem der jeweilige Datenposten gefunden wird, und wobei die Verschlüsselung unter Verwendung eines Verschlüsselungsverfahrens durchgeführt wird, das eine homomorphe Verschlüsselungsfunktion unterstützt, die ein inneres Vektorprodukt von verschlüsselten Daten berechnet, um Durchsuchen durch Berechnung des inneren Vektorprodukts der verschlüsselten Vektoreinzelabfrage und des verschlüsselten Indexes zuzulassen;

Empfangen, von dem Server, des verschlüsselten Ergebnisses; und

Entschlüsseln des Ergebnisses zum Identifizieren mindestens eines in der Datenbank des Servers gespeicherten Dokuments, das die Suchabfrage erfüllt,

wobei die QNF die Suchabfrage folgendermaßen definiert:

$L_1$# ... #$L_k$;

wobei $L_j$, für j=1,...,k, ein Boole'sches Literal bezeichnet, und

# ein logisches UND oder ein logisches ODER bezeichnet, wobei jede Variable der Boole'schen Literale mindestens einmal auftritt.

2. Vorrichtung nach einem der vorhergehenden Ansprüche, wobei, wenn die Boole'scher-Ausdruck-Art aus SONST besteht, die Vorrichtung ferner ausgelegt ist zum Berechnen der Vektoreinzelabfrage basierend auf den folgenden Beziehungen:

$$q_{j_i} \leftarrow 2^i$$

$$q_l \leftarrow 0 \text{ für } l \notin \{j_0, \ldots, j_{k-1}\}$$

wobei q Elemente der Vektoreinzelabfrage bezeichnen.

3. Vorrichtung nach Anspruch 2, wobei, wenn die Boole'scher-Ausdruck-Art aus SONST besteht, das entschlüsselte Ergebnis als Vektor $z_F = (z_0,...,z_{n-1})^T$ repräsentiert wird, wobei die Vorrichtung ferner ausgelegt ist zum Überprüfen für j=0,...n-1, dass ein gewisses Dokument dj die Suchabfrage dann und nur dann erfüllt, wenn:

$$z_j \in \left\{ \sum_{i=0}^{k-1} c_i 2^i \,\middle|\, c_i \in \{0,1\}, F(c_0, \ldots, c_{k-1}) = 1 \right\}$$

wobei F die Boole'sche Funktion bezeichnet, die die Vektoreinzelabfrage repräsentiert.

4. Vorrichtung nach einem der vorhergehenden Ansprüche, wobei, wenn die Boole'scher-Ausdruck-Art aus CNF besteht, in welcher jede Variable der Suchabfrage höchstens einmal auftritt, die Vorrichtung ferner ausgelegt ist zum Berechnen der Vektoreinzelabfrage basierend auf den folgenden Beziehungen:

$$q_j \leftarrow (\lambda_F + 1)^s \ (\text{resp. } q_j \leftarrow -(\lambda_F + 1)^s)$$

für Klausel $K_s$ der Form $X_j$ (resp. - $X_j$)

$$q_j \leftarrow 0.$$

wobei:

Xj, -Xj die Boole'schen Literale in der Suchabfrage bezeichnen
q Elemente der Vektoreinzelabfrage bezeichnen;
$\lambda_F$ die Länge der längsten Klausel einer konjunktiven Repräsentation der Einzelabfrage bezeichnet, wobei jede Klausel $K_S$ eine Disjunktion von Boole'schen Literalen bezeichnet;
s=0, ..., r-1.

5. Vorrichtung nach Anspruch 4, wobei, wenn die Boole'scher-Ausdruck-Art aus CNF besteht, und das entschlüsselte Ergebnis als ein Vektor $Z_F$ repräsentiert ist, wobei:

$$\mathbf{z}_F = (z_0, ..., z_{n-1})^T$$

die Vorrichtung ferner ausgelegt ist zum Überprüfen für i=0,...,n-1, dass ein gewisses Dokument $d_i$ die Suchabfrage dann und nur dann erfüllt, wenn:
$c_{i,s} \neq 0$ für s=0,..., r-1 aus einer Liste von ganzen Zahlen ($c_{i,0},...,c_{i,r-1}$), die gemäß den folgenden Beziehungen erstellt wird:

$$z_{i,0}^{\star} = z_i + \sum_{s=0}^{r-1} \kappa_s (\lambda_F + 1)^s$$

und, wobei $c_{i,0}$ die kleinste nicht negative ganze Zahl repräsentiert, so dass

$$c_{i,0} \equiv z_{i,0}^{\star} \bmod (\lambda_F + 1)$$

;

wenn $c_{i,0} = 0$ ist, dann erfüllt das Dokument di die Anfragefunktion nicht, sonst, wenn r>1, dann

$$z_{i,1}^{\star} = (z_{i,0}^{\star} - c_{i,0})(\lambda_F + 1)^{-1}$$

$$c_{i,1} \equiv z_{i,1}^{\star} \bmod (\lambda_F + 1)$$

;

wobei $c_{i,1}$ die kleinste nicht negative ganze Zahl bezeichnet.

6. Vorrichtung nach einem der vorhergehenden Ansprüche, wobei, wenn die Boole'scher-Ausdruck-Art aus DNF besteht, in welcher jede Variable der Suchabfrage höchstens einmal auftritt, die Vorrichtung ferner ausgelegt ist zum Berechnen der Vektoreinzelabfrage

$$q_j \leftarrow (\lambda_F + 1)^s \ (\text{resp. } q_j \leftarrow -(\lambda_F + 1)^s)$$

für Klausel $K_S$ der Form $X_j$ (resp. - $X_j$)

$$q_j \leftarrow 0.$$

basierend auf den Beziehungen:
wobei:

  Xj, -Xj die Boole'schen Literale in der Suchabfrage bezeichnen
  q Elemente der Vektoreinzelabfrage bezeichnen;
  $\lambda_F$ die Länge der längsten Klausel einer konjunktiven Repräsentation der Vektoreinzelabfrage bezeichnet, wobei jede Klausel eine Konjunktion von Boole'schen Literalen bezeichnet;
  s=0, ..., r-1.

7. Vorrichtung nach Anspruch 6, wobei, wenn die Boole'scher-Ausdruck-Art aus DNF besteht, und das entschlüsselte Ergebnis als ein Vektor $Z_F$ repräsentiert ist, wobei:

$$\mathbf{z}_F = (z_0, \dots, z_{n-1})^T$$

die Vorrichtung ferner ausgelegt ist zum Überprüfen für i=0,...,n-1, dass ein gewisses Dokument $d_i$ die Suchabfrage dann und nur dann nicht erfüllt, wenn:
$c_{i,s} \neq l_s$ für s=0,..., r-1 aus einer Liste von ganzen Zahlen $(c_{i,0},...,c_{i,r-1})$ die gemäß den folgenden Beziehungen erstellt wird:

$$z_{i,0}^{\star} = z_i + \sum_{s=0}^{r-1} \kappa_s (\lambda_F + 1)^s$$

und,

wobei $c_{i,0}$ die kleinste nicht negative ganze Zahl repräsentiert, so dass

$$c_{i,0} \equiv z_{i,0}^{\star} \bmod (\lambda_F + 1)$$

;

wenn $c_{i,0} = l_0$ ist, dann erfüllt das Dokument $d_i$ die Anfragefunktion, sonst, wenn $r>1$, dann

$$z_{i,1}^{\star} = (z_{i,0}^{\star} - c_{i,0})(\lambda_F + 1)^{-1}$$

$$c_{i,1} \equiv z_{i,1}^{\star} \bmod (\lambda_F + 1)$$

;

wobei $c_{i,1}$ die kleinste nicht negative ganze Zahl bezeichnet.

8. Vorrichtung nach einem der vorhergehenden Ansprüche, wobei, wenn die Boole'scher-Ausdruck-Art aus QNF besteht, die Vorrichtung ferner ausgelegt ist zum Berechnen der Vektoreinzelabfrage basierend auf den folgenden Beziehungen:

Falls Literal $L_0$ von der Form $X_j$ ist, dann Setzen von $q_j=1$, $\tau_0=1$ , $\rho_0=1$ und $\mu_0=0$, sonst ist das Literal $L_0$ von der Form $\sim X_j$, Setzen von $q_j=-1$, $\tau_0=0$, $\rho_0=0$ und $\mu_0=-1$,

Für $L_{i+1} = X_j$ und $F = L_0 \diamond ... \diamond L_i \wedge L_{i+1} \diamond ... \diamond L_{t-1}$ (wobei $i = 0$ oder $i + 1 = t - 1$) Setzen von $q_j \leftarrow 1 + \tau_i + |\mu_i|$, $\tau_{i+1} \leftarrow 2\tau_i + 1 + |\mu_i|$,

$$\varrho_{i+1} \leftarrow \varrho_i + 1 + \tau_i + |\mu_i|$$

und $\mu_{i+1} \leftarrow \mu_i$.

Für $L_{i+1} = \neg X_j$ und $F = L_0 \diamond ... \diamond L_i \wedge L_{i+1} \diamond ... \diamond L_{t-1}$ Setzen von $q_j \leftarrow -1 - \tau_i - |\mu_i|$,

$$\tau_{i+1} \leftarrow \tau_i, \varrho_{i+1} \leftarrow \varrho_i$$

und $\mu_{i+1} \leftarrow \mu_i - 1 - \tau_i - |\mu_i|$,

Für $L_{i+1} = X_j$ und $F = L_0 \diamond ... \diamond L_i \vee L_{i+1} \diamond ... \diamond L_{t-1}$ Setzen von

$$q_j \leftarrow |\varrho_i| + |\mu_i| + 1,$$

$$\varrho_{i+1} \leftarrow \varrho_i \text{ und } \mu_{i+1} \leftarrow \mu_i,$$

$$\tau_{i+1} \leftarrow \tau_i + |\varrho_i| + |\mu_i| + 1,$$

und $\mu_{i+1} \leftarrow \mu_i$,

für $L_{i+1} = \neg X_j$ und $F = L_0 \diamond .... \diamond L_i \vee L_{i+1} \diamond ... \diamond L_{t-1}$ Setzen von

$$q_j \leftarrow -\varrho_i - |\mu_i| - 1,$$

$$\tau_{i+1} \leftarrow \tau_i, \varrho_{i+1} \leftarrow -|\mu_i| - 1$$

und

$$\mu_{i+1} \leftarrow \mu_i - \varrho_i - |\mu_i| - 1.$$

9. Vorrichtung nach Anspruch 8, wobei, wenn die Boole'scher-Ausdruck-Art aus QNF besteht, und das entschlüsselte Ergebnis als Vektor $Z_F$ repräsentiert wird, wobei:

$$\mathbf{z}_F = (z_0, ..., z_{n-1})^T$$

die Vorrichtung ferner ausgelegt ist zum Überprüfen, dass ein gewisses Dokument $d_i$, wobei i $\in$ {0, ..., $n$-1} ist, die Suchabfrage dann und nur dann erfüllt, wenn:

$z_i \geq \rho_{t-1}$,

wobei $\rho_{t-1}$ eine Entschlüsselung eines verschlüsselten Werts bezeichnet, der von dem Server in Verknüpfung mit dem verschlüsselten Ergebnis empfangen wird.

10. Vorrichtung nach einem der vorhergehenden Ansprüche, wobei der Server ferner ausgelegt ist zum Durchsuchen des verschlüsselten Indexes durch Multiplizieren einer Matrixrepräsentation des verschlüsselten Indexes mit einer Vektorrepräsentation der verschlüsselten Einzelanfrage, um eine Vektorrepräsentation des verschlüsselten Ergebnisses zu berechnen.

11. Vorrichtung nach einem der vorhergehenden Ansprüche, wobei die Vorrichtung als mindestens ein Clientendgerät, das sich in Netzwerkkommunikation mit dem Server befindet implementiert ist.

12. Computerimplementiertes Verfahren zum Durchsuchen von verschlüsselten Daten, die in einer Datenbank gespeichert sind, unter Verwendung einer Boole'schen Abfrage, wobei das Verfahren die folgenden Schritte umfasst:

Empfangen einer Suchabfrage, die mehrere Boole'sche Literale umfasst, die jeweils eine Variable oder eine negierte Variable umfassen, wobei das Auftreten einer Variablen angibt, dass ein Abfragedatenposten, der der Variablen entspricht, einbezogen werden muss, und das Auftreten einer negierten Variablen angibt, dass ein Abfragedatenposten, der der Variablen entspricht, nicht einbezogen werden soll, wobei jeder Abfragedatenposten einer aus einer endlichen Menge von möglichen Datenposten ist;

Analysieren der Suchabfrage zum Bestimmen einer Boole'sche-Ausdruck-Art der Suchabfrage unter einer Gruppe von vordefinierten Boole'scher-Ausdruck-Arten, die mindestens eine der Folgenden umfasst: eine Abfragenormalform, QNF, eine Disjunktivnormalform, DNF, eine Konjunktivnormalform, CNF, und SONST;

Berechnen einer Vektoreinzelabfrage aus der Suchabfrage mit einem Vektorelement für jeden der möglichen Datenposten, das einen Wert aufweist, der einen Datenposten der Suchabfrage gemäß der bestimmten Boole'scher-Ausdruck-Art der Suchabfrage repräsentiert;

Verschlüsseln der Vektoreinzelabfrage;

Übermitteln der verschlüsselten Vektoreinzelabfrage an einen Server, wobei der Server die verschlüsselte Vektoreinzelabfrage auf eine Suche über einen verschlüsselten Index einer Datenbank von Dokumenten hinweg anwendet, um ein verschlüsseltes Ergebnis zu erstellen, wobei der verschlüsselte Index jeden aus der endlichen Menge von möglichen Datenposten auf mindestens ein Dokument abbildet, in dem der jeweilige Datenposten gefunden wird, und wobei die Verschlüsselung unter Verwendung eines Verschlüsselungsverfahrens durchgeführt wird, das eine homomorphe Verschlüsselungsfunktion unterstützt, die ein inneres Vektorprodukt von verschlüsselten Daten berechnet, um Durchsuchen durch Berechnung des inneren Vektorprodukts der verschlüsselten Vektoreinzelabfrage und des verschlüsselten Indexes zuzulassen;

Empfangen, von dem Server, des verschlüsselten Ergebnisses; und

Entschlüsseln des Ergebnisses zum Identifizieren mindestens eines in der Datenbank des Servers gespeicherten Dokuments, das die Suchabfrage erfüllt, wobei die QNF die Suchabfrage folgendermaßen definiert: $L_1$ # ... # $L_k$; wobei Lj, für j=1,...,k, ein Boole'sches Literal bezeichnet, und # ein logisches UND oder ein logisches ODER bezeichnet, wobei jede Variable der Boole'schen Literale mindestens einmal auftritt.

## Revendications

1. Appareil informatique de recherche de données chiffrées mémorisées dans une base de données à l'aide d'une interrogation booléenne, l'appareil étant configuré pour :

   recevoir une interrogation de recherche comprenant une pluralité de libellés booléens comprenant chacun une variable ou une variable niée, dans lequel l'occurrence d'une variable indique qu'un élément de données d'interrogation correspondant à la variable doit être inclus, et l'occurrence d'une variable niée indique qu'un élément de données d'interrogation correspondant à la variable ne doit pas être inclus, chaque élément de données d'interrogation étant l'un d'un ensemble fini d'éléments de données possibles ;
   analyser l'interrogation de recherche pour déterminer un type d'expression booléenne de l'interrogation de recherche parmi un groupe de types d'expressions booléennes prédéfinies comprenant au moins l'une des formes suivantes : une forme d'interrogation normale, QNF, une forme normale disjonctive, DNF, une forme normale conjonctive, CNF, et AUTRE ;
   calculer une interrogation unique vectorielle à partir de l'interrogation de recherche, un élément vectoriel de chacun des éléments de données possibles présentant une valeur représentant un élément de données de l'interrogation de recherche conformément au type d'expression booléenne déterminé de l'interrogation de recherche ;
   chiffrer l'interrogation unique vectorielle ;
   transmettre l'interrogation unique vectorielle chiffrée à un serveur, dans lequel le serveur applique l'interrogation unique vectorielle chiffrée pour rechercher dans un index chiffré d'une base de données de documents pour créer un résultat chiffré, dans lequel l'index chiffré mappe chacun des éléments de données de l'ensemble fini d'éléments de données possibles avec au moins un document dans lequel se trouve l'élément de données respectif et dans lequel le chiffrement est exécuté au moyen d'un procédé de chiffrement prenant en charge une fonction de chiffrement homomorphe qui calcule un produit interne vectoriel de données chiffrées, pour permettre la recherche par calcul du produit interne vectoriel de l'interrogation unique vectorielle chiffrée et de l'index chiffré ;
   recevoir depuis le serveur le résultat chiffré ; et
   déchiffrer le résultat pour identifier au moins un document mémorisé dans la base de données du serveur satisfaisant à l'interrogation de recherche,
   dans lequel la QNF définit l'interrogation de recherche conformément à :

   $$L_1 \mathbin{\#} \ldots \mathbin{\#} L_k ;$$

   dans lequel $L_j$, pour $j = 1, ..., k$ indique un libellé booléen, et
   \# indique un ET logique ou un OU logique, dans lequel chaque variable des libellés booléens apparaît une fois au maximum.

2. Appareil selon l'une quelconque des revendications précédentes, dans lequel lorsque le type d'expression booléenne est AUTRE, l'appareil est en outre configuré pour calculer l'interrogation unique vectorielle sur la base des relations suivantes :

   $$q_{j_i} \leftarrow 2^i$$

   $$q_l \leftarrow 0$$

   pour $l \notin \{j_0, ..., j_{k-1}\}$
   dans lequel q indique des éléments de l'interrogation unique vectorielle.

3. Appareil selon la revendication 2, dans lequel lorsque le type d'expression booléenne est AUTRE, le résultat déchiffré est représenté en tant que vecteur $Z_F = (z_0, ..., z_{N-1})^T$, l'appareil étant en outre configuré pour vérifier pour $j = 0, ...$ $n - 1$ qu'un certain document dj satisfait à l'interrogation de recherche si et seulement si :

$$z_j \in \left\{ \sum_{i=0}^{k-1} c_i 2^i \mid c_i \in \{0,1\}, F(c_0, \ldots, c_{k-1}) = 1 \right\}$$

dans lequel F indique la fonction booléenne représentant l'interrogation unique vectorielle.

4. Appareil selon l'une quelconque des revendications précédentes, lorsque le type d'expression booléenne est CNF dans lequel chaque variable de l'interrogation de recherche apparaît une fois au maximum, l'appareil étant en outre configuré pour calculer l'interrogation unique vectorielle sur la base des relations suivantes :

$$q_j \leftarrow (\lambda_F + 1)^S \ (\text{resp. } q_j \leftarrow - (\lambda_F + 1)^S)$$

pour l'article $K_s$ de la forme $X_j$ (resp. $-X_j$)

$$q_j \leftarrow 0,$$

dans lequel :

$X_j$, $-X_j$ indique les libellés booléens dans l'interrogation de recherche q indique des éléments de l'interrogation unique vectorielle ;
$\lambda_F$ indique la longueur du plus long article d'une représentation conjonctive de l'interrogation unique, dans lequel chaque article $K_s$ indique une disjonction de libellés booléens ;
s = 0, ..., r-1.

5. Appareil selon la revendication 4, lorsque le type d'expression booléenne est CNF, et que le résultat déchiffré est représenté en tant que vecteur $Z_F$, dans lequel :

$$Z_F = (z_0, \ldots, z_{n-1})^T,$$

l'appareil étant en outre configuré pour vérifier pour i = 0, ... n - 1 qu'un certain document $d_i$ satisfait à l'interrogation de recherche si et seulement si :
$c_{i,s} \neq 0$ pour s = 0, ..., r - 1 d'une liste d'entiers $(c_{i,0}, ..., c_{i,r-1})$ créée conformément aux relations suivantes :

$$z_{i,0}^* = z_i + \sum_{s=0}^{r-1} K_s (\lambda_F + 1)^s$$

et

dans lequel $c_{i,0}$ représente l'entier non négatif le plus petit de sorte que $c_{i,0} \equiv z_{i,0}^* \bmod (\lambda_F + 1)$ ; lorsque $c_{i,0}$ = 0, alors le document $d_i$ ne satisfait pas à la fonction d'interrogation, sinon, lorsque r > 1, alors

$$z_i^* = (z_{i,0}^* - c_{i,0}) (\lambda_F + 1)^{-1}$$

$$(c_{i,1} \equiv z_{i,1}^* \bmod (\lambda_F + 1) ;$$

dans lequel $c_{i,1}$ indique l'entier non négatif le plus petit.

6. Appareil selon l'une quelconque des revendications précédentes, lorsque le type d'expression booléenne est DNF dans lequel chaque variable de l'interrogation de recherche apparaît une fois au maximum, l'appareil étant en outre configuré pour calculer l'interrogation unique vectorielle

$$q_j \leftarrow (\lambda_F + 1)^S \ (\text{resp. } q_j \leftarrow - (\lambda_F + 1)^S)$$

pour l'article $K_s$ de la forme $X_j$ (resp. $- X_j$)

$$q_j \leftarrow 0$$

sur la base des relations suivantes :
dans lequel :

> $X_j$, $-X_j$ indique les libellés booléens dans l'interrogation de recherche q indique des éléments de l'interrogation unique vectorielle ;
> $\lambda_F$ indique la longueur du plus long article d'une représentation disjonctive de l'interrogation unique vectorielle, dans lequel chaque article indique une conjonction de libellés booléens ;
> s = 0, ..., r-1.

**7.** Appareil selon la revendication 6, lorsque le type d'expression booléenne est DNF, et que le résultat déchiffré est représenté en tant que vecteur $Z_F$, dans lequel :

$$Z_F = (z_0, \ldots, z_{n-1})^T,$$

l'appareil étant en outre configuré pour vérifier pour i = 0, ... n - 1 qu'un certain document $d_i$ ne satisfait pas à l'interrogation de recherche si et seulement si :
$c_{i, s} \neq I_S$ pour s = 0, ..., r - 1 d'une liste d'entiers $(c_{i,0}, \ldots, c_{i,r-1})$ créée conformément aux relations suivantes :

$$z_{i,0}^* = z_i + \sum_{s=0}^{r-1} \kappa_s (\lambda_F + 1)^s$$

et

dans lequel $c_{i,0}$ représente l'entier non négatif le plus petit de sorte que $(c_{i,0} \equiv z_{i,0}^* mod \ (\lambda_F + 1)$ ; lorsque $c_{i,0}$ = $I_0$, alors le document $d_i$ satisfait à la fonction d'interrogation, sinon, lorsque r > 1, alors

$$z_{i,1}^* = (z_{i,0}^* - c_{i,0}) (\lambda_F + 1)^{-1}$$

$$c_{i,1} \equiv z_{i,1}^* mod \ (\lambda_F + 1) ;$$

dans lequel $c_{i,1}$ indique l'entier non négatif le plus petit.

**8.** Appareil selon l'une quelconque des revendications précédentes, lorsque le type d'expression booléenne est QNF, l'appareil étant en outre configuré pour calculer l'interrogation unique vectorielle sur la base des relations suivantes :

> si le libellé $L_0$ est sous la forme Xj alors définir $q_j = 1$, $\tau_0 = 1$, $\rho_0 = 1$ et $\mu_0 = 0$, sinon le libellé $L_0$ est sous la forme $\sim X_j$, définir $q_j = -1$, $\tau_0 = 0$, $\rho_0 = 1$ et $\mu_0 = -1$,
> pour $L_{i+1} = X_j$ et $F = L_0 \lozenge ... \lozenge L_i \wedge L_{i+1} \lozenge ... \lozenge L_{t-1}$ (où $i = 0$ ou $i + 1 = t - 1$) définir $q_j \leftarrow 1 + \tau_i + |\mu_i|$, $\tau_{i+1} \leftarrow 2\tau_i + 1 + |\mu_i|$,

$$\varrho_{i+1} \leftarrow \varrho_i + 1 + \tau_i + |\mu_i|$$

> et $\mu_{i+1} \leftarrow \mu_i$,
> pour $L_{i+1} = -X_j$ et $F = L_0 \lozenge ... \lozenge L_i \wedge L_{i+1} \lozenge ... \lozenge L_{t-1}$ définir $q_j \leftarrow -1 - \tau_{i+1} - |\mu_i|$, $\tau_{i+1} \leftarrow \tau_i$,

$$\varrho_{t+1} \leftarrow \varrho_i$$

et $\mu_{i+1} \leftarrow \mu_i - 1 - \tau_i - |\mu_i|$,
pour $L_{i+1} = X_j$ et $F = L_0 \lozenge ... \lozenge L_i \vee Li+1 \lozenge ... \lozenge L_{t-1}$ définir

$$q_j \leftarrow | \varrho_i | + |\mu_i| + 1, \tau_{i+1} \leftarrow$$

$$\tau_i + | \varrho_i | + |\mu_i| + 1, \varrho_{i+1} \leftarrow \varrho_i$$

et $\mu_{i+1} \leftarrow \mu_i$,
pour $Li+1 = -X_j$ et $F = L_0 \lozenge ... \lozenge L_i \vee Li+1 \lozenge ... \lozenge L_{t-1}$ définir

$$q_j \leftarrow - \varrho_i - |\mu_i| - 1, \tau_{i+1} \leftarrow \tau_i,$$

$$\varrho_{1+1} \leftarrow - |\mu_i| - 1$$

et

$$\mu_{i+1} \leftarrow \mu_i - \varrho_i - |\mu_i| - 1.$$

**9.** Appareil selon la revendication 8, lorsque le type d'expression booléenne est QNF, et que le résultat déchiffré est représenté en tant que vecteur $Z_F$, dans lequel :

$$Z_F = (z_0, ..., z_{n-1})^T,$$

l'appareil étant en outre configuré pour vérifier qu'un certain document $d_i$ dans lequel $i \in \{0, ..., n-1\}$ satisfait à l'interrogation de recherche si et seulement si :

$$z_i \geq \varrho_{t-1},$$

dans lequel

$$\varrho_{t-1}$$

indique un déchiffrement d'une valeur chiffrée reçue depuis le serveur en association avec le résultat chiffré.

**10.** Appareil selon l'une quelconque des revendications précédentes, dans lequel le serveur est en outre configuré pour rechercher l'index chiffré en multipliant une représentation matricielle de l'index chiffré par une représentation vectorielle de l'interrogation unique chiffrée pour calculer une représentation vectorielle du résultat chiffré.

**11.** Appareil selon l'une quelconque des revendications précédentes, l'appareil étant mis en œuvre en tant qu'au moins un terminal client dans une communication en réseau avec le serveur.

**12.** Procédé mis en œuvre par ordinateur de recherche de données chiffrées mémorisées dans une base de données à l'aide d'une interrogation booléenne, le procédé comprenant les étapes suivantes :

recevoir une interrogation de recherche comprenant une pluralité de libellés booléens comprenant chacun une variable ou une variable niée, dans lequel l'occurrence d'une variable indique qu'un élément de données d'interrogation correspondant à la variable doit être inclus, et l'occurrence d'une variable niée indique qu'un élément de données d'interrogation correspondant à la variable ne doit pas être inclus, chaque élément de données d'interrogation étant l'un d'un ensemble fini d'éléments de données possibles ;

analyser l'interrogation de recherche pour déterminer un type d'expression booléenne de l'interrogation de recherche parmi un groupe de types d'expressions booléennes prédéfinies comprenant au moins l'une des formes suivantes : une forme d'interrogation normale, QNF, une forme normale disjonctive, DNF, une forme normale conjonctive, CNF, et AUTRE ;

calculer une interrogation unique vectorielle à partir de l'interrogation de recherche, un élément vectoriel de chacun des éléments de données possibles présentant une valeur représentant un élément de données de l'interrogation de recherche conformément au type d'expression booléenne déterminé de l'interrogation de recherche ;

chiffrer l'interrogation unique vectorielle ;

transmettre l'interrogation unique vectorielle chiffrée à un serveur, dans lequel le serveur applique l'interrogation unique vectorielle chiffrée pour rechercher dans un index chiffré d'une base de données de documents pour créer un résultat chiffré, dans lequel l'index chiffré mappe chacun des éléments de données de l'ensemble fini d'éléments de données possibles avec au moins un document dans lequel se trouve l'élément de données respectif et dans lequel le chiffrement est exécuté au moyen d'un procédé de chiffrement prenant en charge une fonction de chiffrement homomorphe qui calcule un produit interne vectoriel de données chiffrées, pour permettre la recherche par calcul du produit interne vectoriel de l'interrogation unique vectorielle chiffrée et de l'index chiffré ;

recevoir depuis le serveur le résultat chiffré ; et

déchiffrer le résultat pour identifier au moins un document mémorisé dans la base de données du serveur satisfaisant à l'interrogation de recherche,

dans lequel la QNF définit l'interrogation de recherche conformément à :

$L_1$ # ... # $L_k$ ; dans lequel $L_j$, pour j = 1, ..., k indique un libellé booléen, et

# indique un ET logique ou un OU logique, dans lequel chaque variable des libellés booléens apparaît une fois au maximum.

Receive search query including Boolean
literals
102

↓

Analyze search query to determine
predefined Boolean expression type
104

↓

Calculate single query from search query
according to determined predefined
Boolean expression type
106

↓

Encrypt single query
108

↓

Transmit encrypted single query
110

↓

Search over encrypted data using the
encrypted single query
112

↓

Receive encrypted results
114

↓

Decrypt encrypted results
116

FIG. 1

FIG. 2

FIG. 3

FIG. 4

500

402    406    410

Query Analysis

Query
Generation

502

504

506

FIG. 5

600

410                          412        414              416      402

Query                        Query      Encrypted        Result
Generator                    Execution  Index Data       Decryption

602A

602B

602C

602D                                    606

                  604

                                                                 608

                                                          610

FIG. 6

702 — Key and parameter generation

704 — Encryption of plaintext by means of key and parameters, build index

706 — Query generation by means of User Input, key and parameters

708 — Application of query to index

710 — Decryption of result

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMANTHA SUSAN MATHEW et al.** Aiding Effective Encrypted Document Manipulation incorporated with document categorization technique in cloud. *PROCEDIA COMPUTER SIENCE,* vol. 46